# FASCICULE DE BREVET EUROPEEN

(11) **EP 1 538 857 B1**
(45) Date de publication et mention de la délivrance du brevet: **13.07.2011**
(21) Numéro de dépôt: 04300838.2
(22) Date de dépôt: 02.12.2004
(51) Int. Cl.: H04W 12/04

(54) **Procédé de sauvegarde des données d'un téléphone mobile**
Verfahren zur Sicherstellung von Daten eines Mobiltelefons
Method for backing up mobile telephone data

(30) Priorité: 05.12.2003 FR 0350986
(43) Date de publication de la demande: 08.06.2005
(73) Titulaire: SAGEM MOBILES, 75512 Paris (FR)
(72) Inventeur: Hubert, Guy, 92150, SURESNES (FR)
(74) Mandataire: Jacobson, Claude

(56) Documents cités:
- EP-A- 1 288 840
- WO-A-03/009621
- WO-A-03/037016
- GB-A- 2 377 776
- GB-A- 2 378 854

## Description

### DOMAINE TECHNIQUE DE L'INVENTION

La présente invention a pour objet un procédé de sauvegarde des données d'un téléphone mobile. Plus particulièrement, l'invention propose une solution pour récupérer, dans un moyen de mémorisation extérieur à un téléphone mobile d'un utilisateur, un ensemble de données, initialement mémorisées dans le téléphone mobile de l'utilisateur, en s'assurant d'une part que les données stockées dans le moyen de mémorisation extérieur sont protégées, et d'autre part que leur récupération ne puisse être effectuée que par l'utilisateur initial, ou par un tiers avec son accord.

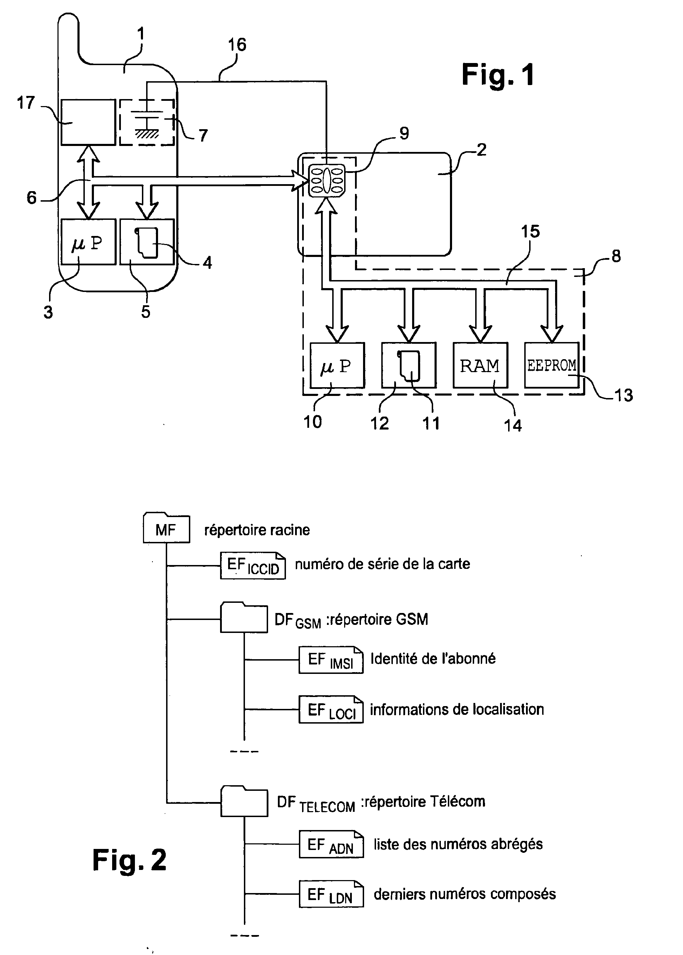

Le domaine de l'invention est donc, d'une façon générale, celui des téléphones mobiles. Dans ce domaine, on dispose désormais de combinés mobiles qui, outre leur fonction première de communication sur un réseau cellulaire de télécommunication, par exemple le réseau GSM, offrent un ensemble de fonctionnalités supplémentaires permettant aux utilisateurs de disposer d'options diverses telles que la prise de photographies, la mémorisation de numéros de téléphone, la gestion d'un agenda, le choix d'une configuration personnelle ergonomique particulière parmi d'autres.... Toutes ces informations doivent être mémorisées dans un ou plusieurs modules de mémoire du téléphone mobile. Une architecture fréquente des téléphones mobiles actuellement disponibles sur le marché est schématiquement représentée à la figure 1.

La figure 1 montre sous une forme schématique un téléphone mobile 1 comportant une carte à puce 2. La carte à puce 2 est fréquemment appelée carte SIM (pour Subscriber Identity Module en anglais, module d'identité d'abonné en français). Le téléphone 1 comporte essentiellement un premier microprocesseur 3, qui est notamment capable d'exécuter un premier ensemble d'applications 4 contenues dans une première mémoire de programmes 5, une mémoire de données 17, un premier bus de communication bidirectionnel 6 susceptible de véhiculer des informations de données, d'adresses et de commandes, notamment entre le microprocesseur 3, la mémoire de données 17, la mémoire de programmes 5, et un dispositif d'alimentation 7.

La carte SIM 2 est une carte à puce qui est capable de réaliser des fonctions sécurisées de calcul et de contrôle de données. Elle est également capable de réaliser des fonctions de mémorisation dans une mémoire interne. Une évolution des cartes à puce SIM classiques a conduit aux cartes SIM dites phase 2+, ou toolkit ou encore pro-active, qui sont capables d'envoyer des commandes à un téléphone mobile. Généralement, ces commandes dites pro-actives permettent à une carte à puce de gérer des dialogues de type homme/machine entre un téléphone mobile et un utilisateur de ce téléphone mobile en utilisant notamment un écran et/ou un clavier de ce téléphone mobile comme interface de dialogue.

La carte SIM 2 comporte essentiellement un micromodule 8. Le micromodule 8 comporte un connecteur 9, un deuxième microprocesseur 10 commandé par un deuxième ensemble d'applications 11 mémorisées dans une deuxième mémoire de programmes 12 de type ROM (Read Only Memory en anglais, pour Mémoire à lecture seule), une mémoire non volatile 13 de type EEPROM (Electrically Erasable Read Only Memory en anglais, pour mémoire à lecture seule programmable effaçable électriquement), une mémoire 14 de type RAM (Random Access Memory en anglais, pour mémoire à accès aléatoire, mais on préférera l'expression mémoire volatile) et un deuxième bus de communication 15, susceptible de véhiculer des informations de données, d'adresses et de commandes. Le connecteur 9 permet une connexion électrique, via une liaison métallique 16 reliée à une broche métallique du connecteur 9, entre le premier bus 6 du téléphone 1 et le deuxième bus 15 de la carte 2.

Le téléphone mobile 1 et la carte SIM 2 comportent donc chacun des éléments de mémoire qui permettent de stocker différentes informations. On trouve dans la carte SIM 2, notamment une organisation normalisée de différents fichiers, telle que représentée à la figure 2. L'architecture des données d'une carte SIM obéit à l'architecture arborescente hiérarchisée classique des systèmes d'exploitation. Un répertoire racine MF contient des fichiers élémentaires EF et des répertoires dédiés DF, qui peuvent eux-mêmes contenir d'autre répertoires DF ou des fichiers EF.

Le répertoire racine MF comporte au moins les différents répertoires et/ou fichiers qui sont susceptibles d'être accessibles par des commandes d'entrée/sortie de type lecture/écriture:
- un premier fichier EF comportant le numéro de série ICCID de la carte SIM à laquelle il appartient ;
- un répertoire dit répertoire Télécom ; ce répertoire regroupe les informations liées au service de télécommunication (liste de numéros abrégés, derniers numéros composés, derniers messages courts reçus ou transmis...) ;
- un répertoire dit répertoire GSM ; ce répertoire comporte notamment le numéro IMSI (International Mobile Suscriber Identity en anglais ; c'est l'identité internationale d'un abonné), la langue préférentielle choisie par l'utilisateur, des informations de localisation...

A chaque fichier, on associe un niveau d'accès qui peut notamment nécessiter l'entrée d'un mot de passe. Quatre type d'accès sont possible pour une carte SIM : la lecture, la modification, l'invalidation, qui permet d'empêcher un accès au fichier, et la réhabilitation qui permet de rétablir un accès à un fichier qui a été invalidé. Pour chaque type d'accès, on distingue cinq niveaux d'accès des données stockées dans la carte SIM :
- ALW : la donnée est accessible même si aucun mot de passe n'a été rentré ; le numéro de série ICCID de la carte SIM possède ce niveau d'accès en lecture;
- CHV1 : la donnée est accessible si un mot de passe personnel de l'abonné a été désactivé ou a été présenté à la carte SIM ;
- CHV2 : la donnée est accessible si un code de complément de personnalisation a été présenté à la carte SIM ;
- ADM : la donnée est accessible uniquement à l'entité administrative, c'est à dire l'opérateur GSM, qui a créé le fichier dans lequel se trouve la donnée ;
- NEV : la donnée ne peut jamais être lue ou accessible ; le numéro de série ICCID de la carte SIM possède ce niveau d'accès en modification.

Dans un fonctionnement normal le téléphone 1 et le micromodule échangent des informations en respectant un protocole de communication défini dans la norme ISO7816-3. Cette norme prévoit qu'un échange d'informations avec le téléphone 1 et le micromodule 8 se fasse toujours sur l'initiative du téléphone 1. Ainsi, on définit un message de commande et un message de réponse.

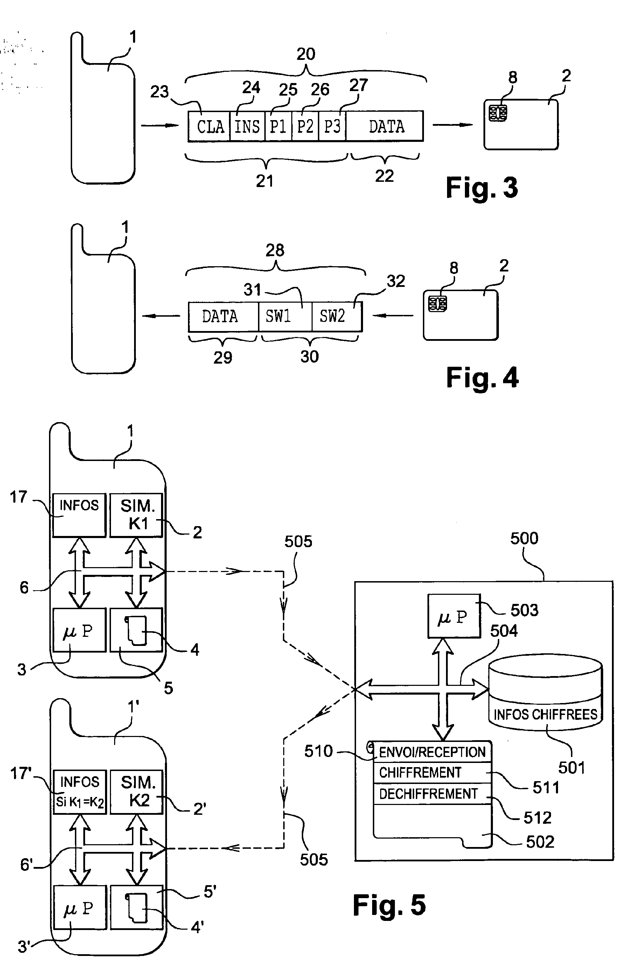

La figure 3 montre un exemple d'une structure d'un message 20 de commande envoyé au micromodule 8 par le téléphone 1. Ce message 20 comporte un en-tête 21 et un champ 22 facultatif de données. L'en-tête 21 comporte cinq champs 23 à 27 d'un octet chacun. Le champ 23 reçoit une valeur précisant un type d'application. Le champ 24 reçoit une valeur précisant l'instruction à exécuter. Le champ 25 et le champ 26 reçoivent des valeurs permettant de préciser des paramètres de l'instruction définie dans le champ 24. Les valeurs dans le champ 25 et le champ 26 sont facultatives. Le champ 27 reçoit une valeur permettant de donner la longueur en bit soit du message 20 soit d'un message de réponse auquel on s'attend. Une longueur en bit du champ 22 est variable, et reçoit une valeur correspondant à une donnée utile au micromodule 8 pour réaliser l'instruction placée dans le champ 24.

En réponse à ce message 20, le micromodule 8 de la carte 2 envoie au téléphone 1, dans la figure 4, un message 28 de réponse. Le message 28 comporte un champ 29 de données et un épilogue 30. L'épilogue 30 comporte un champ 31 et un champ 32 d'un octet chacun. Une valeur reçue dans le champ 31 et/ou 32 indique si l'instruction envoyée par le message 20 (figure 3) a été exécutée correctement ou non. Généralement une valeur reçue dans le champ 31 représente une exécution correcte ou une exécution incorrecte de l'instruction et une valeur reçue dans le champ 32 représente généralement, lors d'une exécution incorrecte de l'instruction, une cause du problème rencontré. Le champ 29, tout comme le champ 22, est facultatif.

Selon la norme précitée une communication du téléphone 1 vers le micromodule 8 se fait toujours en décomposant un message à émettre tel que le message 20. De même une communication du micromodule 8 vers le téléphone 1 se fait toujours en décomposant un message émis tel que le message 28.

Comme on l'a vu lors de la description des figures 1 et 2, il est possible de mémoriser un ensemble de données au sein du téléphone mobile et/ou de la carte SIM. Outre les données mentionnées lors de la description de la figure 2, un utilisateur peut également mémoriser certaines informations personnelles dans la carte SIM, par exemple des numéros de téléphone associés à un nom. Cependant, l'espace mémoire disponible dans la carte SIM est limité, et il est rapidement impossible à un utilisateur de mémoriser l'ensemble des informations qui lui sont propres, notamment lorsqu'elles sont volumineuses en terme d'espace mémoire occupé, comme c'est le cas par exemple pour des photographies numériques. Le module de mémoire 17 du téléphone mobile est donc abondamment sollicité pour mémoriser des fichiers dont la taille interdit leur mémorisation dans la carte SIM, ou pour mémoriser différentes configurations liées à l'ergonomie du téléphone mobile (choix d'un "papier peint" comme fond d'écran, mémorisation de différents types de sonneries choisies par l'utilisateur...).

### ARRIERE-PLAN TECHNOLOGIQUE DE L'INVENTION

Un problème se pose donc lorsque, pour une raison quelconque, un utilisateur est amené à changer de téléphone mobile (en gardant la même carte SIM, ce qui lui permet notamment, normalement, de conserver son numéro IMSI), ou à le laisser à un réparateur. En effet, dans le premier cas, en dehors des données contenues dans la carte SIM, il perdra l'ensemble des informations mémorisées au sein du téléphone mobile ; dans le deuxième cas, une intervention sur le téléphone mobile risque d'entraîner également la perte de ces informations. Il faut donc prévoir un procédé de sauvegarde des informations mémorisées dans les mémoires d'un téléphone mobile, tout en garantissant à l'utilisateur que ces données ne feront pas l'objet d'une utilisation frauduleuse, et qu'elles ne pourront être restituées qu'à lui seul.

Dans l'état de la technique, on connaît différents procédés qui ont été proposés comme solution de sauvegarde ou de transfert des données d'un téléphone mobile.

On connaît par exemple la demande de brevet Européen publiée sous le numéro EP 1 213 937, qui divulgue un procédé de sauvegarde d'applications d'un téléphone mobile dans un module de mémoire externe en proposant d'associer les données extraites du téléphone à un numéro de série de ce téléphone ou à un numéro d'appel associé à ce téléphone. Les informations ainsi sauvegardées ne peuvent par la suite être transférées que dans un téléphone mobile ayant le même numéro de série ou ayant un numéro d'appel identique ―d'une part. Mais un tel procédé n'est pas suffisamment sécurisé . Et, d'autre part, les données ne sont pas protégées en lecture dans le module de mémoire et nous constatons que :
- soit c'est le numéro de série qui est utilisé pour authentifier le téléphone vers lequel on transfère les données, auquel cas l'utilisateur ne peut pas changer de téléphone mobile sans perdre ses données ;
- soit c'est un numéro de téléphone qui est utilisé. Or un numéro de téléphone est attribué par un opérateur; par exemple, en GSM, le numéro de téléphone correspond à un paramètre MSIN (Mobile Suscriber Identification Number en anglais), intégré dans un champ MSISDN (Mobile Station Integrated Services Digital Network en anglais) qui est attribué par un opérateur. Il n'est donc pas associé de manière exclusive et définitive aux données sauvegardées, un numéro de téléphone pouvant être réattribué à un deuxième utilisateur si le premier utilisateur résilie son abonnement. De plus, les informations relatives au numéro de téléphone sont le plus souvent mémorisées dans les seules mémoires du téléphone mobile, ce qui, là encore, empêche l'utilisateur de changer de téléphone en conservant ses informations mémorisées dans son premier téléphone. Le premier utilisateur risque ainsi de ne jamais pouvoir récupérer ses données.

On connaît également, dans l'état de la technique, les documents publiés sous les numéros GB 2 358 556, et US 2002/0156921 qui proposent des procédés de transfert de données mémorisées dans un téléphone mobile d'un premier utilisateur, en utilisant le réseau de télécommunication cellulaire sur lequel fonctionne le téléphone, soit vers un serveur distant, soit vers le téléphone mobile d'un deuxième utilisateur. On connaît enfin le document publié sous le numéro GB 2 378 854, qui évoque un procédé de transfert automatique de mises à jour de données mémorisées dans un téléphone mobile. Mais on ne propose pas, dans ces documents, de solution pour s'assurer que les données transférées sont temporairement stockées de façon sécurisée, et qu'elles ne pourront être récupérées que par le premier utilisateur, propriétaire des données.

Le document publié sous la référence WO 03/037016 propose une procédure pour stocker des données, tel un carnet d'adresses, depuis un téléphone mobile sur un centre de stockage de manière confidentielle et sécurisée, de telle sorte que l'utilisateur changeant de carte SIM puisse récupérer les données stockées. L'utilisateur saisit un mot de passe et le téléphone mobile chiffre, grâce à ce mot de passe, les données à stocker et les envoie au centre de stockage qui stocke ces données chiffrées dans une mémoire à une position dédiée à l'utilisateur. Les données stockées peuvent ainsi être ultérieurement déchiffrées en utilisant le mot de passe.

### DESCRIPTION GENERALE DE L'INVENTION

L'objet de la présente invention est de proposer un procédé de sauvegarde de données contenues dans des modules de mémoire de téléphone mobile, dans une unité de sauvegarde externe au téléphone mobile, en garantissant à un utilisateur du téléphone mobile d'une part que les données sauvegardées ne pourront pas être utilisées par une tierce personne, et d'autre part qu'elles ne pourront être transférées de façon exploitable que vers un téléphone destinataire qu'il aura personnellement désigné.

A cet effet, dans le procédé selon l'invention, on propose de chiffrer les informations à sauvegarder en utilisant comme clé de chiffrement une donnée obligatoirement présente dans une carte SIM de l'utilisateur. Les informations sont ainsi mémorisées de façon chiffrée dans l'unité de sauvegarde externe, et elles ne pourront être déchiffrées qu'au moyen de cette même donnée de la carte SIM, de telle sorte que si les informations chiffrées sont transmises vers un téléphone destinataire qui ne comporte pas la carte SIM de l'utilisateur, les informations chiffrées ne pourront pas être déchiffrées, et les informations originales ne pourront pas être récupérées. On utilise, par exemple, comme clé de chiffrement/déchiffrement le numéro de série de la carte SIM.

Par ailleurs, selon différents modes de mise en oeuvre du procédé selon l'invention, les opérations de chiffrement et/ou déchiffrement sont réalisées soit au sein du premier téléphone mobile, soit au sein de l'unité de sauvegarde externe ; les opérations de chiffrement sont éventuellement perfectionnées pour améliorer la sécurité du chiffrement, et/ou pour laisser la possibilité de récupérer les informations originales au seul premier téléphone mobile.

L'invention concerne donc essentiellement un procédé de sauvegarde d'informations contenues initialement dans au moins un module de mémoire d'un premier téléphone mobile utilisant notamment une première carte SIM pour fonctionner sur un réseau de radiotéléphonie cellulaire, caractérisé en ce qu'il comporte les différentes étapes consistant à :
- chiffrer les informations à sauvegarder au moyen d'un algorithme de chiffrement utilisant une première clé de chiffrement, ladite première clé de chiffrement étant une donnée nécessairement présente dans une carte SIM ;
- mémoriser les informations chiffrées dans un module de mémoire d'une unité de sauvegarde externe au téléphone mobile.

Le procédé selon l'invention présente alternativement ou simultanément une ou plusieurs caractéristiques supplémentaires, parmi les suivantes:
- la première clé de chiffrement est le numéro de série de la première carte SIM du premier téléphone ;
- le procédé comporte l'étape supplémentaire consistant à, préalablement à l'étape de chiffrement, transférer depuis l'unité de sauvegarde externe vers une mémoire de programmes du premier téléphone mobile, l'algorithme de chiffrement pour effectuer l'opération de chiffrement, au moyen de la première clé de chiffrement, dans le premier téléphone mobile ;
- le procédé comporte les différentes étapes supplémentaires consistant à :

- transférer les données chiffrées depuis l'unité de sauvegarde externe vers un module de mémoire d'un téléphone destinataire équipé d'une carte SIM destinataire;
- utiliser un algorithme de déchiffrement faisant intervenir une première clé de déchiffrement, la première clé de déchiffrement étant la donnée, nécessairement présente dans une carte SIM, utilisée pour réaliser l'opération de chiffrement, pour tenter de déchiffrer les données chiffrées ;
- le cas échéant, mémoriser les données déchiffrées dans au moins un module de mémoire du téléphone destinataire ;
- le procédé comporte, préalablement à l'étape d'utilisation de l'algorithme de déchiffrement, une étape supplémentaire consistant à transférer, depuis l'unité de sauvegarde vers le téléphone mobile destinataire, l'algorithme de déchiffrement ;
- l'algorithme de chiffrement des informations à sauvegarder dépend du type du premier téléphone dans lequel sont initialement contenues les informations à sauvegarder ;
- l'algorithme de chiffrement des informations à sauvegarder utilise une deuxième clé de chiffrement , la deuxième clé de chiffrement dépendant du type du premier téléphone dans lequel sont initialement contenues les informations à sauvegarder ;
- la deuxième clé de chiffrement est le numéro de série du premier téléphone mobile.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention. Les figures montrent :
- à la figure 1, déjà décrite, une représentation schématique d'une architecture d'un téléphone mobile équipé d'une carte SIM ;
- aux figures 2, une représentation schématique de l'organisation des fichiers dans une carte SIM ;
- à la figure 3, également déjà décrite, une représentation d'une structure d'un message envoyé par un téléphone mobile vers une carte SIM ;
- à la figure 4, également déjà décrite, une représentation d'une structure d'un message envoyé par une carte SIM vers un téléphone mobile ;
- à la figure 5, une représentation schématique des différents éléments intervenant lors de la mise en oeuvre du procédé selon l'invention.

### DESCRIPTION DES FORMES DE REALISATION PREFEREES DE L'INVENTION

Dans la suite de la description, sauf précision contraire, les éléments apparaissant sur différentes figures conservent les mêmes références, y compris les éléments apparaissant dans les figures déjà décrites.

A la figure 5, on a représenté le téléphone mobile 1 du type de celui décrit à la figure 1. Le téléphone 1 est le premier téléphone d'un utilisateur qui souhaite sauvegarder un ensemble d'informations présentes dans la mémoire de données 17, par exemple des données relatives à son agenda, à son répertoire de téléphone, à un ensemble de sonneries qu'il a téléchargées.... Le procédé selon l'invention peut également être mis en oeuvre avec des informations de type applications logicielles qui sont mémorisées dans la mémoire de programmes 5 du premier téléphone mobile 1.

Un utilisateur peut être intéressé par une sauvegarde de telles données par exemple lorsqu'il amène son téléphone mobile chez un réparateur et qu'il souhaite protéger et récupérer ses données personnelles avant toute intervention qui risquerait d'entraîner la perte de telles données. Il peut également être intéressé par une telle sauvegarde pour pouvoir transférer ultérieurement ses données personnelles vers un autre téléphone mobile.

Pour procéder à la sauvegarde des informations personnelles de l'utilisateur, on utilise une unité de sauvegarde externe 500. L'unité de sauvegarde externe 500 comporte notamment au moins un module de mémoire 501, une mémoire de programmes 502 capables de contenir un ensemble d'applications susceptibles d'intervenir dans le procédé selon l'invention, et un microprocesseur 503 qui gère le fonctionnement de l'unité de sauvegarde externe 500. Un bus de communication bidirectionnel 504, susceptible de véhiculer des informations de données, d'adresses et de commandes, permet à ces différents éléments d'échanger différentes informations.

La mémoire de programmes 502 comporte notamment une application 510, dite application d'envoi et de réception de données, qui permet soit de transmettre des données depuis l'unité de sauvegarde externe 500 vers un téléphone mobile, soit de récupérer des informations du téléphone mobile pour les mémoriser dans le module de mémoire 501. Les différentes opérations de transmission entre un téléphone mobile et l'unité de sauvegarde externe 500 se font par l'intermédiaire d'une liaison 505 qui permet de mettre en relation le bus 6 du téléphone mobile 1 et le bus 504 de l'unité de sauvegarde externe.

Dans un premier mode de mise en oeuvre du procédé selon l'invention, une application 511, dite application de chiffrement, de la mémoire de programmes 502 est transférée, au moyen de l'application d'envoi et de réception 510, dans la mémoire de programmes 5 du téléphone mobile 1 de l'utilisateur. L'application de chiffrement permet de chiffrer l'ensemble des informations à sauvegarder. Elle est ainsi, dans cet exemple, mise en oeuvre au sein du téléphone mobile, par exemple de façon automatique dès qu'elle est transmise dans la mémoire de programmes 5. L'application de chiffrement peut notamment piloter une application, dite application de dialogue avec la carte SIM, de la mémoire de programmes 5 qui permet au téléphone mobile 1 de dialoguer avec la carte SIM 2 selon les protocoles de communication décrits aux figures 3 et 4. L'application de dialogue peut éventuellement posséder la capacité de modifier les niveaux d'accès des données présentes dans la carte SIM. L'application de chiffrement 510 peut ainsi récupérer une donnée particulière, de valeur K1, de la carte SIM 2 pour l'utiliser comme clé de chiffrement.

Dans un mode de mise en oeuvre préféré du procédé selon l'invention, l'algorithme de chiffrement 511 utilise comme clé de chiffrement une donnée qui est nécessairement présente dans toute carte SIM, i.e. ladite donnée est mémorisée dans la carte SIM par obligation normative. Certaines de ces données ont été présentées lors de la description de la figure 2. Cette donnée peut par exemple être le numéro donnant l'identité de l'abonné (numéro IMSI) ou le numéro de série de la carte SIM (numéro ICCID). Dans l'invention, on préférera utiliser le numéro ICCID comme clé de chiffrement. En effet, ce numéro présente la particularité d'avoir une valeur attribuée une fois pour toutes à une carte SIM par le constructeur de la carte SIM. Une même valeur ICCID ne peut être attribuée à plusieurs cartes SIM, et chaque carte SIM ne possède qu'un unique numéro ICCID, alors que le numéro IMSI peut, selon la volonté d'un opérateur, être réattribué à une autre carte SIM, par exemple si une première carte SIM a été détruite. Ainsi, la clé de chiffrement utilisée est unique et appartient de façon certaine à l'utilisateur.

Une fois la clé de chiffrement extraite de la carte SIM, l'opération de chiffrement des informations à sauvegarder est effectuée par l'algorithme de chiffrement placé dans la mémoire de programmes 5. Les informations chiffrées à sauvegarder sont ensuite récupérées, au moyen de l'application d'envoi et de réception 510 de la mémoire de programmes 502 pour être mémorisées dans le module de mémoire 501. Elles ne sont ainsi pas directement interprétables par une quelconque personne qui accéderait directement au contenu du module de mémoire 501. Par ailleurs, les informations peuvent alors être effacées dans le téléphone mobile.

Dans le premier mode de mise en oeuvre décrit, la clé de chiffrement utilisée ne sort pas du téléphone mobile. Dans un deuxième mode de mise en oeuvre, moins sécurisé, du procédé selon l'invention, on prévoit que l'algorithme de chiffrement 511 n'est pas transféré dans le téléphone mobile 1, mais que c'est la clé de chiffrement, accompagnée des informations à chiffrer, qui est extraite de la carte SIM 2 pour être transférée dans l'unité de sauvegarde 500. Le chiffrement est alors effectué au sein de l'unité de sauvegarde 500. Seules les informations chiffrées sont mémorisées dans le module de mémoire 501.

Dans une première variante du procédé selon l'invention, on prévoit d'utiliser un algorithme de chiffrement qui varie en fonction du type de téléphone dont on souhaite extraire des données à sauvegarder ; par type de téléphone, on désigne une marque de téléphone et/ou, pour une marque donnée, un modèle de téléphone. Une interface homme-machine, non représentée, permet de déterminer, au sein de l'unité de sauvegarde 500, quel type de téléphone est concerné par la sauvegarde. Un algorithme de chiffrement spécifique est prévu pour chaque type de téléphone, ou pour plusieurs types de téléphone. Une fois le type de téléphone déterminé, l'algorithme approprié est sélectionné, et le procédé selon l'invention peut être mis en oeuvre selon un des modes décrits précédemment.

Dans une deuxième variante du procédé selon l'invention, qui peut être implémentée en complément de la première variante, l'algorithme de chiffrement fait intervenir une deuxième clé de chiffrement. Celle-ci peut être spécifique à l'unité de sauvegarde externe 500, ou, être spécifique au téléphone 1 dont on extrait les données à sauvegarder. Dans ce dernier cas, on peut par exemple utiliser le numéro de série du téléphone mobile 1 comme clé de chiffrement. Les informations à sauvegarder subissent ainsi un double chiffrement, ce qui améliore la sécurisation des données extraites du téléphone mobile 1. Dans ce cas, les informations sauvegardées ne pourront être récupérées de façon non chiffrée que dans le même téléphone mobile.

Lorsque l'utilisateur souhaite récupérer, dans un téléphone destinataire 1', ses informations sauvegardées, de façon chiffrée, dans le module de mémoire 501, il connecte le téléphone 1' à l'unité de sauvegarde 500 via la liaison 505. Le téléphone destinataire comporte une architecture générale similaire à celle du premier téléphone 1, avec un microprocesseur 3', un ensemble d'applications 4' d'une mémoire de programmes 5', une mémoire de données 17', une carte SIM destinataire 2' et un bus de communication bidirectionnel 6'. Une application 512 de la mémoire de programmes 502, dite application de déchiffrement 512 est mise en oeuvre pour que l'utilisateur récupère ses informations.

Dans un premier mode de mise en oeuvre d'une étape de récupération des informations du procédé selon l'invention, l'application de déchiffrement 512 est transférée, au moyen de l'application d'envoi et de réception 510, dans la mémoire de programmes 5' du téléphone mobile destinataire 1' de l'utilisateur. L'application de déchiffrement permet, lorsqu'elle est utilisée avec une clé de déchiffrement appropriée, de déchiffrer l'ensemble des informations mémorisées dans le module de mémoire 501. L'application de déchiffrement est ainsi, dans cet exemple, mise en oeuvre au sein du téléphone mobile, par exemple de façon automatique dès qu'elle est transmise dans la mémoire de programmes 5'. L'application de déchiffrement 512 peut notamment piloter l'application de dialogue avec la carte SIM, de la mémoire de programmes 5' qui permet au téléphone mobile 1' de dialoguer avec la carte SIM destinataire 2' selon les protocoles décrits aux figures 3 et 4. L'application de déchiffrement 512 peut ainsi récupérer la donnée particulière, nécessairement présente dans la carte SIM destinataire 2', utilisée pour chiffrer les informations comme décrit précédemment, pour l'utiliser comme clé de déchiffrement. Dans l'exemple illustré, la clé de déchiffrement a une valeur K2.

Dans l'invention, les applications de chiffrement et de déchiffrement sont des algorithmes symétriques, c'est à dire que la clé de déchiffrement doit être identique à la clé de chiffrement précédemment utilisée, pour permettre de récupérer les informations de manière non chiffrées. En conséquence, l'utilisateur du téléphone mobile destinataire ne récupérera ses informations originales que si K2=K1 ; en d'autres termes, le téléphone destinataire 1' ne pourra obtenir de façon non chiffrées les informations préalablement chiffrées uniquement s'il fonctionne avec la même carte SIM que le premier téléphone 1 depuis lequel ont été sauvegardées lesdites informations. Si la carte SIM 2' destinataire n'est pas la première carte SIM 2, les informations ne seront pas déchiffrées, et seront inexploitables par un utilisateur du téléphone mobile destinataire 1'.

Dans un deuxième mode de mise en oeuvre, moins sécurisé, d'une étape de récupération des informations du procédé selon l'invention, on prévoit que l'algorithme de déchiffrement 512 n'est pas transféré dans le téléphone mobile destinataire 1', mais que c'est la clé de déchiffrement qui est extraite de la carte SIM destinataire 2' pour être transférée dans l'unité de sauvegarde 500. Le déchiffrement est alors effectué au sein de l'unité de sauvegarde 500. Les informations déchiffrées, dans l'hypothèse selon laquelle le téléphone mobile destinataire 1' utilise la même carte SIM que le premier téléphone mobile 1, sont ensuite transférées dans le téléphone mobile destinataire 1'.

Dans la première variante du procédé selon l'invention, précédemment décrite, on prévoit d'utiliser un algorithme de déchiffrement qui coopère avec l'algorithme de chiffrement effectivement utilisé pour chiffrer les informations. Dans cette variante, plusieurs algorithmes de déchiffrement sont donc disponibles ; l'algorithme approprié est alors choisi en fonction du type du premier téléphone dont on a extrait les informations.

Dans la deuxième variante du procédé selon l'invention, précédemment décrite, qui peut être implémentée en complément de la première variante, l'algorithme de déchiffrement fait intervenir une deuxième clé de déchiffrement qui doit être identique à la deuxième clé de chiffrement utilisée. Si la deuxième clé de chiffrement utilisée était spécifique à l'unité de sauvegarde externe 500, alors l'utilisateur ne pourra récupérer ses données qu'à partir de l'unité de sauvegarde 500 initialement utilisée pour sauvegarder les données, et non pas à partir d'une autre unité de sauvegarde dans laquelle auraient été transférées les informations chiffrées. Si la deuxième clé de chiffrement utilisée était spécifique au premier téléphone 1, alors l'utilisateur ne pourra récupérer ses informations, de façon non chiffrées, que dans le premier téléphone 1, et toujours avec la condition que c'est bien la première carte SIM 2 qui est utilisée dans le premier téléphonel.

## Revendications

1. Procédé de sauvegarde d'informations contenues initialement dans au moins un module de mémoire (17) d'un premier téléphone mobile (1) utilisant notamment une première carte SIM (2) pour fonctionner sur un réseau de radiotéléphonie cellulaire, **caractérisé en ce qu'**il comporte les différentes étapes consistant à :
- chiffrer les informations à sauvegarder au moyen d'un algorithme de chiffrement (511) utilisant une première clé de chiffrement (K1), ladite première clé de chiffrement (K1) étant une donnée normalisée obligatoirement présente dans la première carte SIM ;
- mémoriser les informations chiffrées dans un module de mémoire (501) d'une unité de sauvegarde (500) externe au premier téléphone mobile (1).

2. Procédé selon la revendication précédente **caractérisé en ce que** la première clé de chiffrement (K1) est le numéro de série (ICCID) de la première carte SIM (2) du premier téléphone (1).

3. Procédé selon l'une au moins des revendications précédentes **caractérisé en ce qu'**il comporte l'étape supplémentaire consistant à, préalablement à l'étape de chiffrement, transférer depuis l'unité de sauvegarde externe (500) vers une mémoire de programmes (5) du premier téléphone mobile (1), l'algorithme de chiffrement (511) au moyen de la première clé de chiffrement (K1), dans le premier téléphone mobile (1).

4. Procédé selon l'une au moins des revendications précédentes **caractérisé en ce qu'**il comporte les différentes étapes supplémentaires consistant à :
- transférer les données chiffrées depuis l'unité de sauvegarde externe (500) vers un module de mémoire (17') d'un téléphone destinataire (1') équipé d'une seconde carte SIM, dite carte SIM destinataire (2');
- utiliser un algorithme de déchiffrement (512) faisant intervenir une clé de déchiffrement (K2), ladite clé de déchiffrement (K2) étant une donnée normalisée obligatoirement présente dans la carte SIM destinataire, pour tenter de déchiffrer les données chiffrées ;
- le cas échéant, mémoriser les données déchiffrées dans au moins un module de mémoire (17') du téléphone destinataire (1').

5. Procédé selon la revendication précédente **caractérisé en ce qu'**il comporte, préalablement à l'étape d'utilisation de l'algorithme de déchiffrement (512), une étape supplémentaire consistant à transférer, depuis l'unité de sauvegarde (500) vers le téléphone mobile destinataire (1'), l'algorithme de déchiffrement (512).

6. Procédé selon l'une au moins des revendications précédentes **caractérisé en ce que** l'algorithme de chiffrement (511) des informations à sauvegarder dépend du type du premier téléphone (1) dans lequel sont initialement contenues les informations à sauvegarder.

7. Procédé selon l'une au moins des revendications précédentes **caractérisé en ce que** l'algorithme de chiffrement (511) des informations à sauvegarder utilise une deuxième clé de chiffrement, la deuxième clé de chiffrement dépendant du type du premier téléphone (1) dans lequel sont initialement contenues les informations à sauvegarder.

8. Procédé selon la revendication précédente **caractérisé en ce que** la deuxième clé de chiffrement est le numéro de série du premier téléphone mobile (1).

## Claims

1. Method of backing up data initially contained in at least one memory module (17) of a first mobile telephone (1) using a first SIM card (2) in particular for operating on a cellular radio telephony network, **characterised in that** it comprises the different steps consisting of:
- encrypting the data to be backed up by means of an encryption algorithm (511) using a first encryption key (K1), said first encryption key (K1) being a compulsorily normalised datum contained in the first SIM card;
- storing the encrypted data in a memory module (501) of a back-up unit (500) external to the first mobile telephone (1).

2. Method as claimed in the preceding claim, **characterised in that** the first encryption key (K1) is the serial number (ICCID) of the first SIM card (2) of the first telephone (1).

3. Method as claimed in at least one of the preceding claims, **characterised in that** it comprises the additional step consisting of transferring the encryption algorithm (511) from the external back-up unit (500) to a programme memory (5) of the first mobile telephone (1) by means of the first encryption key (K1) in the first mobile telephone (1) prior to the encryption step.

4. Method as claimed in at least one of the preceding claims, **characterised in that** it comprises the different additional steps consisting of:
- transferring the encrypted data from the external back-up unit (500) to a memory module (17') of an addressee telephone (1') equipped with a second SIM card, namely an addressee SIM card (2');
- using a decryption algorithm (512) causing the intervention of a decryption key (K2), said decryption key (K2) being a compulsorily normalised datum contained in the addressee SIM card in order to attempt to decrypt the encrypted data;
- storing the decrypted data in at least one memory module (17') of the addressee telephone (1'), depending on the case.

5. Method as claimed in the preceding claim, **characterised in that** it comprises, prior to the step of using the decryption algorithm (512), an additional step of transferring the decryption algorithm (512) from the back-up unit (500) to the addressee mobile telephone (1').

6. Method as claimed in at least one of the preceding claims, **characterised in that** the encryption algorithm (511) for the data to be backed up depends on the type of the first telephone (1) in which the data to be backed up is originally contained.

7. Method as claimed in at least one of the preceding claims, **characterised in that** the encryption algorithm (511) for the data to be backed up uses a second encryption key, the second encryption key depending on the type of the first telephone (1) in which the data to be backed up is originally contained.

8. Method as claimed in the preceding claim, **characterised in that** the second encryption key is the serial number of the first mobile telephone (1).

## Patentansprüche

1. Verfahren zum Speichern von Informationen, die zunächst in wenigstens einem Speichermodul (17) eines ersten Mobiltelephons (1) enthalten sind, das insbesondere eine erste SIM-Karte (2) verwendet, um in einem Zellenfunktelephon-Netz betrieben zu werden, **dadurch gekennzeichnet, dass** es die verschiedenen Schritte umfasst, die darin bestehen:
- die zu speichernden Informationen mittels eines Verschlüsselungsalgorithmus (511), der einen ersten Verschlüsselungsschlüssel (K1) verwendet, zu verschlüsseln, wobei der erste Verschlüsselungsschlüssel (K1) eine normierte Dateneinheit ist, die in der ersten SIM-Karte obligatorisch vorhanden ist;
- die verschlüsselten Informationen in einem Speichermodul (501) einer Speichereinheit (500) außerhalb des ersten Mobiltelephons (1) zu speichern.

2. Verfahren nach dem vorhergehenden Anspruch, **dadurch gekennzeichnet, dass** der erste Verschlüsselungsschlüssel (K1) die Seriennummer (ICCID) der ersten SIM-Karte (2) des ersten Telephons (1) ist.

3. Verfahren nach wenigstens einem der vorhergehenden Ansprüche, **dadurch gekennzeichnet, dass** es den zusätzlichen Schritt umfasst, der darin besteht, vor dem Verschlüsselungsschritt den Verschlüsselungsalgorithmus (501) von der externen Speichereinheit (500) mittels des ersten Verschlüsselungsschlüssels (K1) in dem ersten Mobiltelephon (1) zu einem Programmspeicher (5) des ersten Mobiltelephons (1) zu übertragen.

4. Verfahren nach wenigstens einem der vorhergehenden Ansprüche, **dadurch gekennzeichnet, dass** es die zusätzlichen verschiedenen Schritte umfasst, die darin bestehen:
- die verschlüsselten Daten von der externen Speichereinheit (500) zu einem Speichermodul (17') eines Zieltelephons (1'), das mit einer zweiten SIM-Karte, einer so genannten Ziel-SIM-Karte (2'), ausgerüstet ist, zu übertragen;
- einen Entschlüsselungsalgorithmus (512) zu verwenden, der einen Entschlüsselungsschlüssel (K2) verwendet, wobei der Entschlüsselungsschlüssel (K2) eine normierte Dateneinheit ist, die in der Ziel-SIM-Karte obligatorisch vorhanden ist, um zu versuchen, die verschlüsselten Daten zu entschlüsseln;
- gegebenenfalls die entschlüsselten Daten in wenigstens einem Speichermodul (17') des Zieltelephons (1') zu speichern.

5. Verfahren nach dem vorhergehenden Anspruch, **dadurch gekennzeichnet, dass** es vor dem Schritt des Verwendens des Entschlüsselungsalgorithmus (512) einen zusätzlichen Schritt umfasst, der darin besteht, den Entschlüsselungsalgorithmus (512) von der Speichereinheit (500) zu dem Ziel-Mobiltelephon (1') zu übertragen.

6. Verfahren nach wenigstens einem der vorhergehenden Ansprüche, **dadurch gekennzeichnet, dass** der Algorithmus (511) zum Verschlüsseln von zu speichernden Informationen vom Typ des ersten Telephons (1) abhängt, in dem die zu speichernden Informationen zunächst enthalten sind.

7. Verfahren nach wenigstens einem der vorhergehenden Ansprüche, **dadurch gekennzeichnet, dass** der Algorithmus (511) zum Verschlüsseln von zu speichernden Informationen einen zweiten Verschlüsselungsschlüssel verwendet, wobei der zweite Verschlüsselungsschlüssel vom Typ des ersten Telephons (1) abhängt, in dem die zu speichernden Informationen zunächst enthalten sind.

8. Verfahren nach dem vorhergehenden Anspruch, **dadurch gekennzeichnet, dass** der zweite Verschlüsselungsschlüssel die Seriennummer des ersten Mobiltelephons (1) ist.
